# EUROPÄISCHE PATENTSCHRIFT

(11) **EP 1 170 097 B1**
(45) Veröffentlichungstag und Bekanntmachung des Hinweises auf die Patenterteilung: **10.09.2003**
(21) Anmeldenummer: 01113810.4
(22) Anmeldetag: 06.06.2001
(51) Int. Cl.: B25J 19/00

(54) **Roboter mit Kühleinrichtungen**
Robot with cooling means
Robot muni de moyens de refroidissement

(30) Priorität: 07.07.2000 DE 10033224
(43) Veröffentlichungstag der Anmeldung: 09.01.2002
(73) Patentinhaber: KUKA Roboter GmbH, 86165 Augsburg (DE)
(72) Erfinder: Hietmann, Gerhard, 86405 Herbertshofen (DE); Finsterwalder, Thomas, 86179 Augsburg (DE)
(74) Vertreter: Lempert, Jost, Dipl.-Phys. Dr. rer.nat.

(56) Entgegenhaltungen:
- EP-A- 0 728 559
- WO-A-99/15319
- DE-U- 29 711 523
- US-A- 5 658 121
- US-A- 5 945 011

## Beschreibung

Die Erfindung betrifft einen Roboter mit verteilt angeordneten Antriebselektroniken.

Die DE 198 46 960 A1 zeigt eine Handhabungsvorrichtung an einer Kunststoffverarbeitungsmaschine mit auf dieser in üblicher Weise den anzutreibenden Teilen zugeordneten Antriebsmotoren und einem zentralen Steuerschrank, an dem sowohl eine zentrale Einspeisungseinheit für die Versorgung der Antriebsmotoren mit Energie als auch eine zentrale Steuerungseinheit zur Versorgung der Antriebsmotoren mit Steuerinformationen angeordnet sind.

Es wurde allerdings auch schon wiederholt vorgeschlagen, bei einem Roboter in gattungsgemäßer Weise elektronische Komponenten, insbesondere Komponenten der Antriebselektronik, wie Wechselrichter, Servoverstärker, Leitungshalbleiter, Treiberschaltungen, Strommesser und Regelschaltungen nicht zentral in einem Sockel oder separaten Schaltschrank anzuordnen, sondern verteilt an der Roboterstruktur selbst. Da solche Leistungselektroniken Wärme erzeugen, ergibt sich das Problem der Wärmeabfuhr. Hierzu wurde im Hinblick darauf, dass die Roboterstruktur bzw. die tragenden Elemente des Roboters aus Metall bestehen und dieses eine gute Wärmeleitfähigkeit hat, vorgeschlagen, die genannte Leistungselektronik gut wärmeleitend mit der Roboterstruktur oder einem Getriebegehäuse zu verbinden und die Wärme hierüber abzuleiten. Nachteilig ist, dass die verwandten Materialien einen erheblichen Wärmeausdehnungskoeffizienten haben und daher die Erwärmung der Roboterstruktur bzw. unterschiedliche Temperaturen je nach Belastungszustand damit zu mechanischen und geometrischen Veränderungen führen können, sowie zu einer Erhöhung der Motortemperatur, die zu Leistungsreduktion und erhöhter Gefährdung bei Berührung führen kann und der Getriebetemperatur, die eine Veränderung des Schmiermittels und damit eine Reduktion der Belastbarkeit und Lebensdauer bedingt.

Entsprechendes gilt für eine Fernsteuervorrichtung in Form eine Manipulators gemäß der DE 40 19 217 C2. Dort steht eine gedruckte Schaltung, die elektronische Komponenten trägt über dem Träger mit einem Metallsockel wärmeleitend in Verbindung. Auch hier wird die Wärme also über die tragende Struktur abgeleitet.

Die DE 297 115 230 beschreibt Antriebselektroniken welche mit Kühleinrichtungen versehen sind.

Der Erfindung liegt daher die Aufgabe zugrunde unter Vermeidung der vorgenannten Nachteile einen verbesserten Roboter zu schaffen.

Erfindungsgemäß wird die genannte Aufgabe mit den Merkmalen des Anspruches 1 gelöst.

Erfindungsgemäß wird so erreicht, dass die durch die verteilt an der Roboterstruktur angeordnete Antriebselektronik in Form eines Antriebsverstärkers erzeugte Wärme nicht in die Roboterstruktur oder Teile derselben eingeleitet wird, sondern über die - gegenüber der Roboterstruktur separate Kühleinrichtung direkt an die Umgebung abgeführt wird, so dass es nicht zu mechanischen und geometrischen Veränderungen der Roboterstruktur aufgrund des Wärmeausdehnungskoeffizienten ihres Materials kommt.

In bevorzugter Ausgestaltung ist dabei vorgesehen, dass jede Antriebselektronik auch mechanisch mit einer ihr zugeordneten passiven Kühleinrichtung verbunden ist, wobei insbesondere jede Antriebselektronik über ihre Kühleinrichtung am Roboter gehalten ist.

Die Kühleinrichtung kann dabei in verschiedener Weise ausgebildet sein. In bevorzugter Ausgestaltung ist aber vorgesehen, dass die Kühleinrichtung einen Kühlkörper, insbesondere mit Kühlrippen oder -platten aufweist.

Weitere bevorzugte Ausgestaltungen der Erfindung sehen vor, dass der Kühlkörper einen Befestigungsrand aufweist und über diesen am Roboter befestigt ist, wobei insbesondere die Kühleinrichtung unter Zwischenlage eines Wärmeisolators am Roboter festgelegt ist. Auch kann der Befestigungsrand von vornherein wärmeisoliert vom Kühlkörper ausgeführt sein. In diesem Fall ist keine separate Wärmeisolation erforderlich. Die Wärmeisolation kann auch in den Befestigungsrand am Kühlkörper integriert sein.

Um die gesamte Roboterkontur durch die dezentrale Verteilung von Antriebselektroniken an ihr, insbesondere an der Schwinge nicht zusätzlich einen übermäßig großen Raum einzunehmen lassen und andererseits die durch die statischen Gründe erforderliche Ausbildung der Roboterstruktur bzw. der einzelnen mechanischen Roboterelemente bedingte Kontur und Form zu nutzen, sieht die Erfindung in weiterer bevorzugter Ausgestaltung vor, dass eine Antriebselektronik in eine Ausnehmung oder einen Hohlraum der Roboterstruktur ragt. Diese übernimmt damit die Funktion eines Gehäuses (eines herkömmlichen Steuerungsschranks) und damit des mechanischen Schutzes und der elektrischen Abschirmung der Antriebselektronik und garantiert so eine entsprechende Schutzart insbesondere nach IP 67, so dass die Antriebselektroniken an sich gehäuselos, ohne aufwendiges Gehäuse ausgebildet sein können.

In anderer bevorzugter Ausgestaltung ist vorgesehen, dass die mechanische Verbindung der Antriebselektronik, die über den Befestigungsrand der Kühleinrichtung mit der Roboterstruktur erfolgen kann, von der elektrischen Kontaktierung der Antriebselektronik mit ihren elektrischen Versorgungsleitungen getrennt ist. In bevorzugter Ausgestaltung ist hierzu vorgesehen, dass eine mit Versorgungskabeln verbundene Steckplatte vorgesehen ist, die Steckkontakte aufweist, über die die Antriebselektronik elektrisch kontaktiert ist.

In alternativer Ausführung kann dabei vorgesehen sein, dass entweder die Steckplatte unmittelbar mit der Roboterstruktur verbunden ist oder aber dass die Kühleinrichtung unter Zwischenlage der Steckplatte mit dieser an der Roboterstruktur befestigt ist.

Zur Antriebselektronik gehören - wie schon gesagt - dabei insbesondere Leistungshalbleiter und die ihnen unmittelbar zugeordneten Schaltungsteile wie Treiberschaltungen, Strommesser und ein Mikroprozessor, der die PWM Signale erzeugt, die Stromregelung und die notwendigen Überwachungen sowie die Kommunikation mit der Steuerung ausführt. Ein Zwischenkreisnetzteil kann sowohl zentral z.B. in der Drivebox am Karussell oder verteilt auf alle Antriebselektroniken realisiert sein. Die Erfindung ermöglicht eine kostensparende offene Bauweise der Antriebsverstärker und den Einsatz preisgünstiger Steckverbinder zur Verbindung mit der Backplane. Für die im Innenraum verlaufenden Kabel und die Steckverbinder können so ebenfalls preisgünstige Ausführungen verwendet werden. Durch das Steckprinzip wird eine einfache Tauschbarkeit der Antriebsverstärker erreicht und der Service wesentlich erleichtert. Auch ist es möglich, dass zwei oder drei Antriebsverstärker kleiner Leistung mechanisch zu einer Einheit verbunden sind, wodurch Kosteneinsparungen und Platzeinsparungen durch Wegfall bzw. gemeinsame Nutzung einiger Teile erzielt wird.

Weitere Vorteile der Erfindung ergeben sich aus der nachfolgenden Beschreibung, in der ein Ausführungsbeispiel eines erfindungsgemäßen Roboters unter Bezugnahme auf die Zeichnung im einzelnen erläutert ist. Dabei zeigt:
- Fig. 1: eine perspektivische Seitendarstellung eines erfindungsgemäßen Roboters;

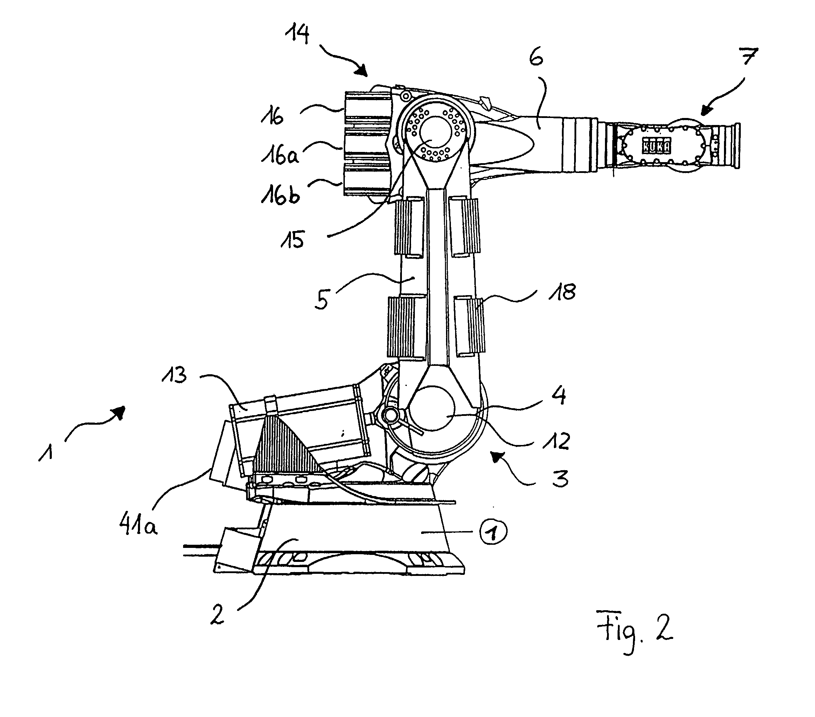

- Fig. 2: eine Seitenansicht des Roboters der Fig. 1 von der der Fig. 1 abgewandten Seite;
- Fig. 3 u. 4: schematische Darstellungen zur Integration der Antriebselektronik in die Roboterstruktur an einem Roboterarm; und
- Fig. 5: eine perspektivische Explosionsdarstellung einer Schwinge mit Antriebselektronik und Kühlkörper

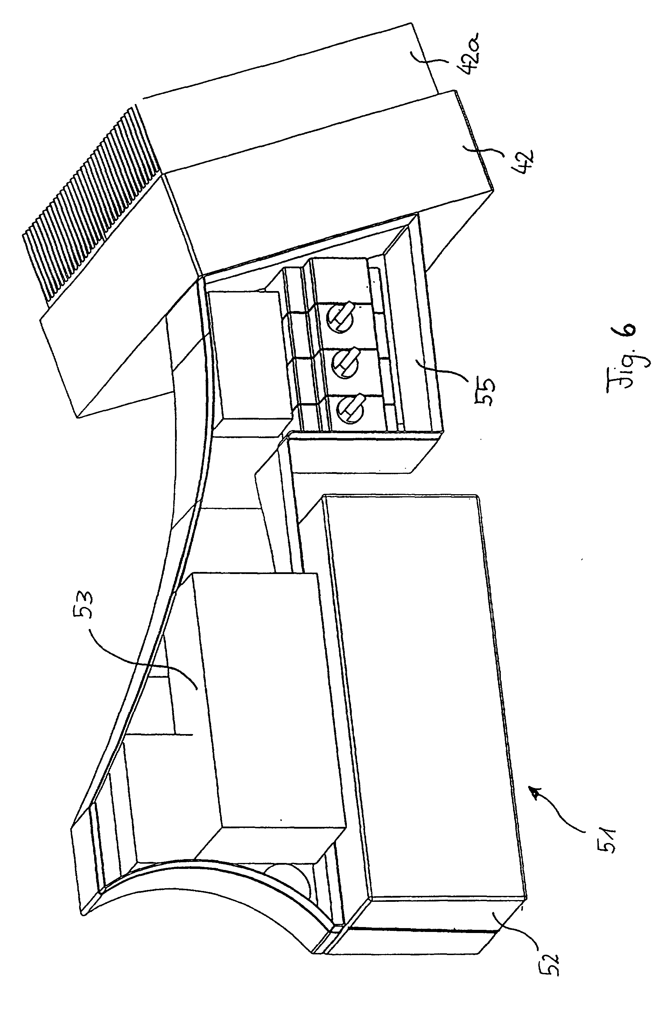

- Fig. 6: eine Darstellung der Antriebselektronik für Dreh- und Schwingenantrieb auf dem Karussell des Roboters.

Ein Roboter 1 gemäß einem Ausführungsbeispeil der Erfindung, wie der in den Fig. dargestellte Sechsachsenroboter weist die übliche Struktur bzw. den üblichen mechanischen Aufbau eines solchen Roboters auf: auf einem Sockel 2 befindet sich das Dreh-Karussell 3. Dieses trägt u.a. ein Lagerteil 4 für eine Schwinge 5, an der wiederum der Roboterarm 6 schwenkbar um die A3-Achse gelagert ist. Der Arm 6 trägt die Roboterhand 7, die selbst um die mit der Achse des Arms 6 fluchtende A-4-Achse verschwenkbar ist und weitere um die A5- und A6-Achse schwenkbare Elemente aufweist.

Das Karussell 3 trägt weiterhin einen Antriebsmotor 11 zum Verschwenken des Karussells 3 selbst um die vertikale A1-Achse. Am Lagerteil 4 des Karussells 3 ist ein Antriebsmotor 12 zum Verschwenken des Arms 5 um die A2-Achse vorgesehen. Das Karussell 3 trägt weiterhin einen Gewichtsausgleich 13 in Form einer Feder. In der Anlenkstelle 14 des Arms 6 an der Schwinge 5 ist ein Antriebsmotor 15 zum Verschwenken des Armes vorgesehen. Weiterhin trägt der Arm 6 an seiner der Hand 7 abgewandten Seite Antriebsmotoren 16, 16a, 16b zur Bewegung der Hand 7 und ihrer einzelnen Teile.

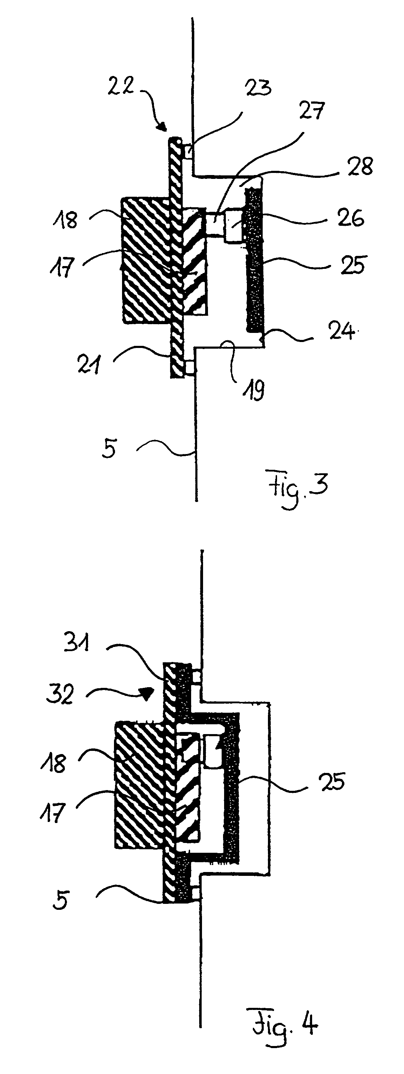

Gemäß einem Ausfürungsbeispiel der Erfindung weist der Roboter weiterhin verteilt oder dezentral an der Struktur angeordnete elektronische Antriebselemente oder Antriebselektroniken 17,41,42,51,52,53 die insbesondere jeweils einen Wechselrichter mit Zwischenkreisnetzteil, Resolver Digital Wandler sowie Ballastwiderstand oder ein Rückspeisemodul, gegebenenfalls aber auch ein Niederspannungsnetzteil sowie Niederspannungselektronik wie eine Steuerung, sowie Einbauplätze zur Integration weiterer Elektronikbaugruppen beinhalten können, auf. Diese sind in die Roboterstruktur integriert, im dargestellten Ausführungsbeispiel insbesondere die Antriebselektronik 17 für die Antriebsmotoren 15 bis 16b verteilt in die Schwinge 5 (Fig. 3,4).

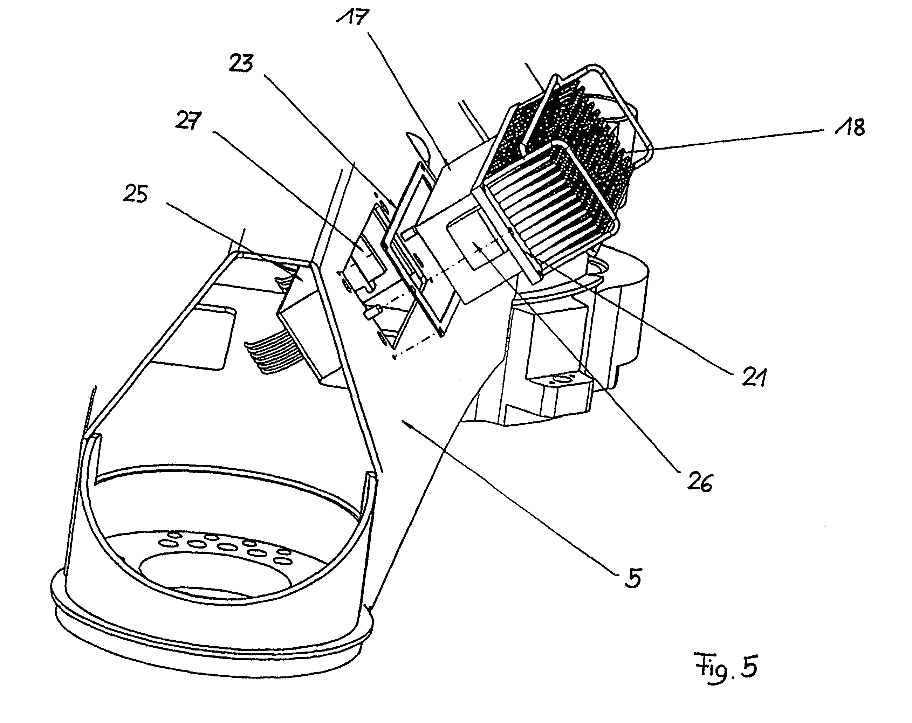

Wie insbesondere der Fig. 5 zu entnehmen ist, sind die Antriebselektroniken zur Wärmeabfuhr auf ihrer nach außen gewandten Seite mit passiven Kühleinrichtungen mit Kühlkörpern in Form von Kühlrippen, Kühlstäben oder dgl. versehen.

Zur Aufnahme der Antriebselektroniken 17 in die Roboterstruktur sind in der Schwinge 5 Ausnehmungen oder Vertiefungen 19 vorgesehen, in die die Antriebselektroniken 17 eintauchen.

Zur Halterung einer Antriebselektronik 17 mit ihrer zugehörigen Kühleinrichtung 18 ist ein Befestigungsrand vorgesehen, von dem aus nach innen die Antriebselektronik 17 ragt und nach außen die Kühleinrichtung 18 ragt.

Der Befestigungsrand 21 selbst ist an der Roboterstruktur, hier Schwinge 5, außerhalb der Vertiefung 19 bei 22 festgelegt und zwar unter Zwischenlage eines Wärmeisolators 23. Die Befestigung kann über Schrauben etc. erfolgen.

Auf dem Boden 24 der Vertiefung 19 der Roboterstruktur (Schwinge 5) ist eine Backplane oder Steckplatte 25 angeordnet, die Steckanschlüsse 26 zur elektrischen Steckverbindung mit einem entsprechenden Steckanschluss 27 an der Antriebselektronik 17 zur Bildung einer durch beide Steckanschlüsse 26, 27 gegebenen Steckverbindung 28 trägt.

Bei der Ausgestaltung der Fig. 4 ist die Steckplatte 25 im Gegensatz zur Ausgestaltung der Fig. 3 nicht eben ausgebildet und direkt mit dem Boden 24 der Vertiefung 19 verbunden. Bei der Ausgestaltung der Fig. 4 ist die Steckplatte 25 vielmehr u- oder topförmig ausgebildet und weist einen nach außen gekehrten Umfangsrand 31 auf, mit dem sie unter den Befestigungsrand 31 greift, so dass diese unter Vermittlung des Randes der Steckplatte 25 an der Roboterstruktur 5 festgelegt ist.

Alternativ kann vorgesehen sein, dass eine Steckerplatte gegenüber der Kühleinrichtung praktisch frei beweglich ist; hierzu ist vorgesehen, dass die Steckerplatte durch ausreichende Längenreserve der angeschlossenen Kabel zum Herstellen der Steckverbindung so weit aus dem Innenraum der Roboterstruktur gezogen werden kann, dass die Steckung bei mechanisch gelöster Verbindung geschehen kann, um einerseits unerwünschte Kräfte durch Fluchtungsprobleme beim Stecken zu vermeiden, andererseits der Steckvorgang unter Sicht unter guter Sicht zu ermöglichen.

Durch das Vorsehen aktiver Kühleinrichtungen oder passiver Kühleinrichtungen mit von der Roboterstruktur nach außen gerichteten Kühlkörpern in Form von Kühlrippen, Kühlstäben oder dgl. wird eine effektive Wärmeabfuhr der von den Antriebselektroniken erzeugten Wärme und damit eine effektive Kühlung bzw. Entwärmung der Antriebselektronik unter Vermeidung einer Wärmeabfuhr über die Roboterstruktur selbst und damit einer Erwärmung derselben, die zu mechanischen und geometrischen Ungenauigkeiten führen könnte, vermieden. Dies wird insbesondere dadurch unterstützt, dass die Antriebselektronik derart an der Roboterstruktur mechanisch festgelegt ist, dass die Kühleinrichtung von ihr wärmeisoliert ist.

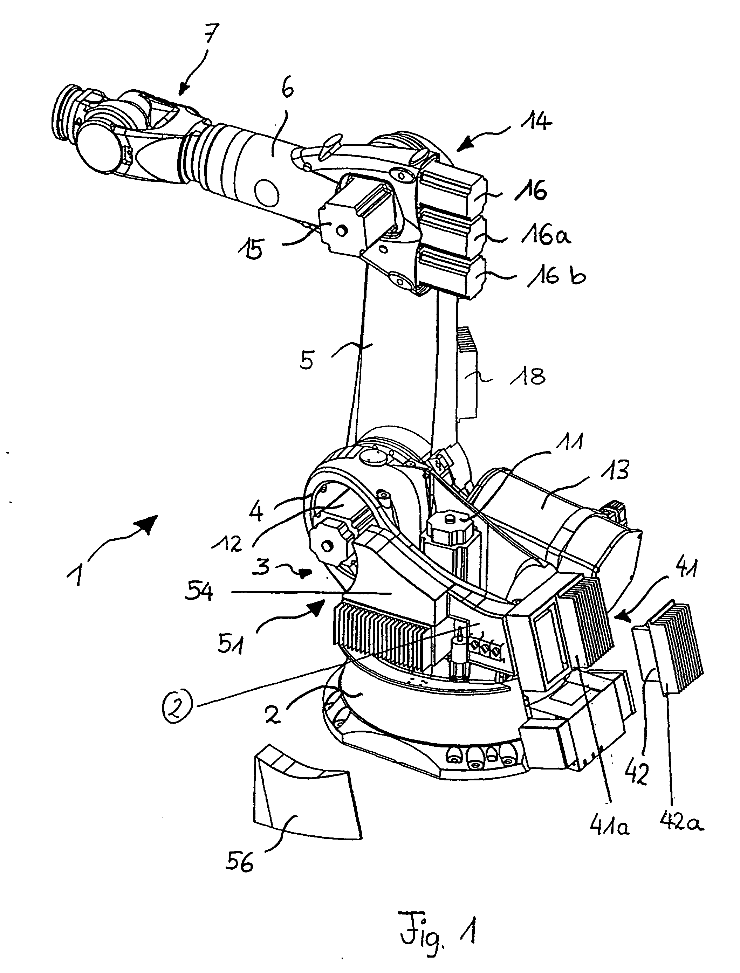

Insbesondere in Fig. 1 bezeichnen 41,42 ebenfalls mit Kühleinrichtungen 41a, 42a versehene Achsverstärkermodule, die in gleicher Weise, wie vorstehend beschrieben, an der Roboterstruktur, hier im Karussell 3 festgelegt bzw. festlegbar sind. Weiterhin ist, wie ebenfalls der Fig. 1 zu entnehmen ist, am Karussell 3, nämlich seitlich des Lagerteils 4 eine Antriebsbox 51 mit gemeinsam genutzten Baugruppen, wie z.B. Niderspannungsnetzteil, die wiederum mit einer Kühleinrichtung 52 versehen ist, vorgesehen.

### Bezugszeichenliste

- 1: Roboter
- 2: Sockel
- 3: Dreh-Karussell
- 4: Lagerteil
- 5: Schwinge
- 6: Roboterarm
- 7: Roboterhand
- 11: Antriebsmotor
- 12: Antriebsmotor
- 13: Gewichtsausgleich
- 14: Anlenkstelle
- 15: Antriebsmotor
- 16,a,b,: Antriebsmotoren
- 17: Antriebselektronik
- 18: Kühleinrichtung
- 21: Befestigungsrand der Antriebseinheit
- 19: Vertiefung
- 23: Wärmeisolator
- 24: Boden
- 25: Steckplatte
- 26: Steckanschlüsse
- 27: Steckanschluss
- 28: Steckverbindung
- 31: Umfangsrand
- 32: Randbereich
- 41a: Kühleinrichtung
- 42a: Kühleinrichtung
- 51: Antriebsbox
- 52: Kühleinrichtung
- 53: Elektronikmodule
- 54: Abdeckung
- 55: Zugänglichkeitsbereich
- 56: Abdeckung

## Patentansprüche

1. Roboter mit verteilt angeordneten Antriebselektroniken, Servoverstärkern, Wechselrichtern, wobei jede Antriebselektronik (17, 41, 42, 51) wärmeisoliert gegenüber der Roboterstruktur angeordnet und mit einer Kühleinrichtung (18, 41, 42, 52) versehen ist.

2. Roboter nach Anspruch 1, **dadurch gekennzeichnet, dass** die Antriebselektroniken (17, 41, 42, 41) wärmeleitend mit einer nach außen gerichteten passiven Kühleinrichtung verbunden sind.

3. Roboter nach Anspruch 1, **dadurch gekennzeichnet, dass** die Antriebselektroniken (17, 41, 42, 51) mit aktiven Kühleinrichtungen versehen sind.

4. Roboter nach einem der Ansprüche 1 bis 3, **dadurch gekennzeichnet, dass** jede Antriebselektronik (17, 41, 42, 41) mechanisch mit einer ihr zugeordneten Kühleinrichtung (18, 41, 42, 52) verbunden ist.

5. Roboter nach einem der Ansprüche 1 bis 4, **dadurch gekennzeichnet, dass** jede Antriebselektronik (17, 41, 42, 51) über ihre Kühleinrichtung (18, 41, 42, 52) am Roboter (1) gehalten ist.

6. Roboter nach einem der vorangehenden Ansprüche, **dadurch gekennzeichnet, dass** die Kühleinrichtung (18, 41, 42, 52) einen Kühlkörper, insbesondere mit Kühlrippen oder -platten aufweist.

7. Roboter nach einem der vorangehenden Ansprüche, **dadurch gekennzeichnet, dass** die Antriebseinrichtung (18, 41, 42, 52) einen Befestigungsrand (32) aufweist und über diesen am Roboter befestigt ist.

8. Roboter nach einem der vorangehenden Ansprüche, **dadurch gekennzeichnet, dass** die Kühleinrichtung (18, 41, 42, 52) unter Zwischenlage eines Wärmeisolators (23) am Roboter (1) festgelegt ist.

9. Roboter nach einem der vorangehenden Ansprüche, **dadurch gekennzeichnet, dass** eine Antriebselektronik (17, 41, 42, 51) in eine Ausnehmung oder einen Hohlraum (19) der Roboterstruktur (5) ragt.

10. Roboter nach einem der vorangehenden Ansprüche, **dadurch gekennzeichnet, dass** eine mit Versorgungskabeln verbundene Steckplatte (25) vorgesehen ist, die Steckkontakte (26) für die Antriebselektronik (17, 41, 42, 51) aufweist, über die die Antriebselektronik (17, 41, 42, 51) elektrisch kontaktiert ist.

11. Roboter nach Anspruch 10, **dadurch gekennzeichnet, dass** die Steckplatte (25) unmittelbar mit der Roboterstruktur (5) verbunden ist.

12. Roboter nach Anspruch 10, **dadurch gekennzeichnet, dass** die Kühleinrichtung (18, 41, 42, 52) unter Zwischenlage der Steckplatte (25) mit dieser an der Roboterstruktur (5) befestigt ist.

## Claims

1. Robot with drive electronics, servo amplifiers and inverters arranged in distributed manner, wherein each drive electronics (17, 41, 42, 51) is thermally insulated with respect to the robot structure and is provided with a cooling device (18, 41, 42, 52).

2. Robot according to claim 1, **characterized in that** the drive electronics (17, 41, 42, 51) are thermally conductively connected to an outwardly directed passive cooling device.

3. Robot according to claim 1, **characterized in that** the drive electronics (17, 41, 42, 51) are provided with active cooling devices.

4. Robot according to one of the claims 1 to 3, **characterized in that** each drive electronics (17, 41, 42, 51) is mechanically connected to a cooling device (18, 41, 42, 52) associated therewith.

5. Robot according to one of the claims 1 to 4, **characterized in that** each drive electronics (17, 41, 42, 51) is held on the robot (1) by means of its cooling device (18, 41, 42, 52).

6. Robot according to one of the preceding claims, **characterized in that** the cooling device (18, 41, 42, 52) has a cooling body, particularly with cooling ribs or plates.

7. Robot according to one of the preceding claims, **characterized in that** the drive device (18, 41, 42, 51) has a fastening edge (32) and is secured by the latter to the robot.

8. Robot according to one of the preceding claims, **characterized in that** the cooling device (18, 41, 42, 52) is fixed to the robot (1), whilst interposing a thermal insulator (23).

9. Robot according to one of the preceding claims, **characterized in that** a drive electronics (17, 41, 42, 51) projects into a recess or cavity (19) of the robot structure (5).

10. Robot according to one of the preceding claims, **characterized in that** a breadboard (25) connected to supply cables is provided and which has plug-in contacts (16) for the drive electronics (17, 41, 42, 51) electrically contacting the latter.

11. Robot according to claim 10, **characterized in that** the breadboard (25) is directly connected to the robot structure (5).

12. Robot according to claim 10, **characterized in that** the cooling device (18, 41, 42, 52), accompanied by the interposing of the breadboard (25), is fixed with the latter to the robot structure (5).

## Revendications

1. Robot comprenant des dispositifs électroniques de commande, des amplificateurs de servocommande, des onduleurs disposés de manière répartie, dans lequel chaque dispositif électronique de commande (17,41,42,51) est disposé isolé thermiquement par rapport à la structure du robot et équipé d'un moyen de refroidissement (18,41,42,52).

2. Robot selon la revendication 1, **caractérisé en ce que** les dispositifs électroniques de commande (17,41,42,51) sont reliés par conduction de chaleur à un moyen de refroidissement passif dirigé vers l'extérieur.

3. Robot selon la revendication 1, **caractérisé en ce que** les dispositifs électroniques de commande (17,41,42,51) sont munis de moyens de refroidissement actifs.

4. Robot selon l'une quelconque des revendications 1 à 3, **caractérisé en ce que** chaque dispositif électronique de commande (17,41,42,51) est reliée mécaniquement à un moyen de refroidissement (18,41,42,52) qui lui est adjoint.

5. Robot selon l'une quelconque des revendications 1 à 4, **caractérisé en ce que** chaque dispositif électronique de commande (17,41,42,51) est maintenu au robot (1) par l'intermédiaire de son moyen de refroidissement (18,41,42,52).

6. Robot selon l'une quelconque des revendications précédentes, **caractérisé en ce que** le moyen de refroidissement (18,41,42,52) présente un dissipateur thermique, en particulier à ailettes ou à plaques de refroidissement.

7. Robot selon l'une quelconque des revendications précédentes, **caractérisé en ce que** le dispositif de commande (18,41,42,52) présente un bord de fixation (32) par lequel il est solidarisé au robot.

8. Robot selon l'une quelconque des revendications précédentes, **caractérisé en ce que** le moyen de refroidissement (18,41,42,52) est fixé au robot (1) avec interposition d'un isolateur thermique (23).

9. Robot selon l'une quelconque des revendications précédentes, **caractérisé en ce qu'**un dispositif électronique de commande (17,41,42,51) s'encastre dans un évidement ou un espace creux (19) de la structure de robot (5).

10. Robot salon l'une quelconque des revendications précédentes, **caractérisé en ce que** l'on prévoit une plaque embrochable (25) reliée à des câbles d'alimentation, présentant des contacts à fiches (26) pour le dispositif électronique de commande (17,41,42,51) au moyen desquels le dispositif électronique de commande (17,41,42,51) est connecté électriquement.

11. Robot selon la revendication 10, **caractérisé en ce que** la plaque embrochable (25) est reliée directement à la structure de robot (5).

12. Robot selon la revendication 10, **caractérisé en ce que** le moyen de refroidissement (18,41,42,52) est fixé à la structure de robot (5) simultanément avec la plaque embrochable (25) par interposition de cette plaque.
